# EUROPÄISCHE PATENTSCHRIFT

(11) **EP 1 598 237 B1**
(45) Veröffentlichungstag und Bekanntmachung des Hinweises auf die Patenterteilung: **20.10.2010**
(21) Anmeldenummer: 05010416.5
(22) Anmeldetag: 13.05.2005
(51) Int. Cl.: B60R 1/12

(54) **Aussenrückblickspiegel für Fahrzeuge, insbesondere Kraftfahrzeuge**
Vehicle exterior mirror
Rétroviseur extérieur de véhicule

(30) Priorität: 17.05.2004 DE 102004025385
(43) Veröffentlichungstag der Anmeldung: 23.11.2005
(73) Patentinhaber: SMR Patents S.à.r.l., 1653 Luxembourg (LU)
(72) Erfinder: Romas, Vasile, 73730 Esslingen (DE); Susca, Ovidin Catalin, 5975 Vatra Dornei (RO)
(74) Vertreter: Rausch, Gabriele

(56) Entgegenhaltungen:
- EP-A- 1 391 755
- DE-A1- 10 039 760
- DE-A1- 10 058 659
- DE-U1- 20 215 760
- DE-U1- 29 614 664
- US-A1- 2002 126 497
- US-A1- 2003 179 087

## Beschreibung

Die Erfindung betrifft einen Außenrückblickspiegel für Fahrzeuge, insbesondere Kraftfahrzeuge, nach dem Oberbegriff des Anspruches 1.

Es ist bekannt, am Außenrückblickspiegel Signal-, Umfeld- oder Anzeigeleuchten vorzusehen. Sie sind entweder im Spiegelgehäuse oder im Spiegelfuß vorgesehen.

Beim gattungsgemäßen Außenrückblickspiegel (DE 202 15 760 U1) sind im unteren Bereich des Rahmens LEDs untergebracht, die ihr Licht nach unten auf den Bodenbereich neben dem Fahrzeug abstrahlen.

Bei einem anderen bekannten Außenrückblickspiegel (US 2002/0126497 A1) sind Leuchteneinheiten vorgesehen, die ihr Licht nach unten zum Boden neben dem Kraftfahrzeug oder in Fahrtrichtung nach hinten abstrahlen.

Bei einem anderen bekannten Außenrückblickspiegel (DE 296 14 664 U1) ist an der Rückseite des Spiegelgehäuses eine Kappe mit Lichtfenstern lösbar befestigt. Durch die Lichtfenster können Leuchtmittel im Spiegelgehäuse ihr Licht abstrahlen. Die Lichtfenster sind so angeordnet, dass das Licht in Fahrtrichtung nach vorn, in Fahrtrichtung seitlich nach außen sowie nach unten zum Boden abgestrahlt wird. An der Rückseite des Spiegelgehäuses kann auch ein Rückstrahler vorgesehen sein, der selbst kein Licht abstrahlt, sondern auftreffende Strahlen reflektiert.

Aus der DE 100 58 659 A1 ist ein Außenrückblickspiegel bekannt, bei dem am Rand oder an der Rückseite des Spiegelgehäuses Leuchtmittel vorgesehen sind, die ihr Licht schräg nach hinten oder schräg nach vorn abstrahlen.

Bei einem weiteren bekannten Außenrückblickspiegel (DE 100 39 760 A1) sind an dem das Spiegelglas umgebenden Rahmen außen vorstehende Leuchtmittel vorgesehen, die ihr Licht in Fahrtrichtung nach hinten quer zum Spiegelglas abstrahlen.

Es ist schließlich ein Außenrückblickspiegel bekannt (US 2003/0179087 A1), bei dem das Spiegelglas durch eine Querwand von Leuchtmitteln getrennt ist, die ihr Licht in Fahrtrichtung nach hinten und damit quer zum Spiegelglas abstrahlen.

Der Erfindung liegt die Aufgabe zugrunde, den gattungsgemäßen Außenrückblickspiegel so auszubilden, dass eine einfache und günstige Montage - eines Leuchtmittels bei geringem Platzbedarf möglich ist.

Diese Aufgabe wird beim gattungsgemäßen Rückblickspiegel erfindungsgemäß mit den kennzeichnenden Merkmalen des Anspruches 1 gelöst.

Beim erfindungsgemäßen Außenrückblickspiegel ist das Leuchtmittel im Rahmen unlösbar befestigt. Es kann einfach und platzsparend im Rahmen untergebracht und dort sicher gehalten werden. Die vom Leuchtmittel ausgesandten Strahlen gelangen durch den Lichtaustritt, der sich neben dem Spiegelglas im Rahmen befindet, nach außen. Der Lichtaustritt ist so angeordnet, dass das austretende Licht etwa parallel zum Spiegelglas strahlt.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: in Ansicht einen erfindungsgemäßen Außenrückblickspiegel mit einem Spiegelglas, das von einem Rahmen umgeben ist, in dem Einbauleuchten vorgesehen sind,
- Fig. 2: eine weitere Ausführungsform eines erfindungsgemäßen Außenrückblickspiegels in einer Darstellung entsprechend Fig. 1,
- Fig. 3: in vergrößerter Darstellung einen Schnitt längs der Linie III-III in Fig. 1 durch eine Einbauleuchte des Rahmens,
- Fig. 4: eine Darstellung entsprechend Fig. 3, jedoch mit einer anders ausgebildeten Einbauleuchte,
- Fig. 5 und Fig. 3b: jeweils einen weiteren erfindungsgemäßen Außenrückblickspiegel in einer Darstellung entsprechend Fig. 1,
- Fig. 7: einen weiteren nicht erfindungsgemäßen Außenspiegel
- Fig. 8: einen Schnitt längs der Linie XIII-XIII in Fig. 7,
- Fig. 9: einen Teil eines weiteren erfindungsgemäßen Außenrückblickspiegels in einer Darstellung entsprechend Fig. 1,

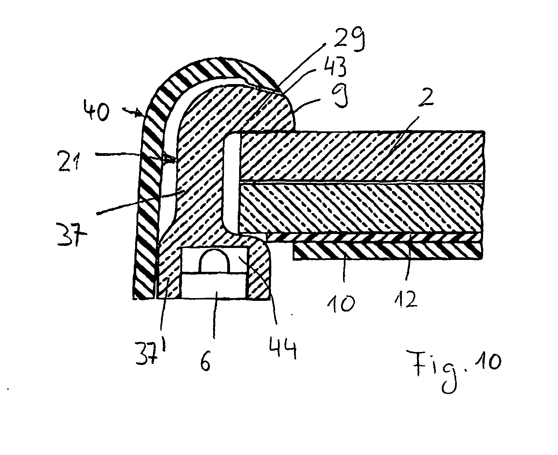

- Fig. 10: einen Schnitt längs der Linie X-X in Fig. 9.

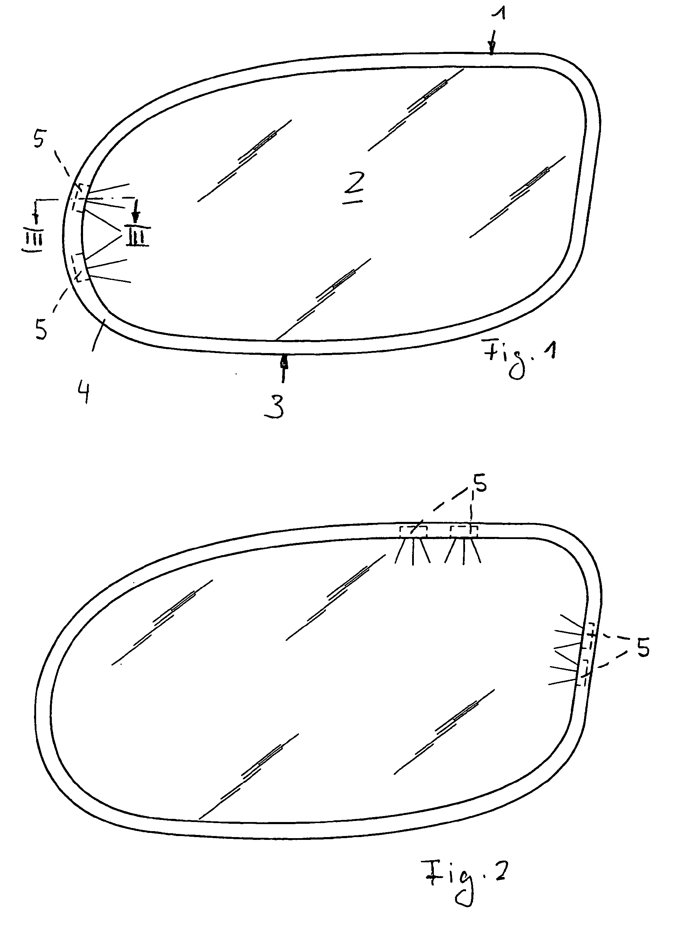

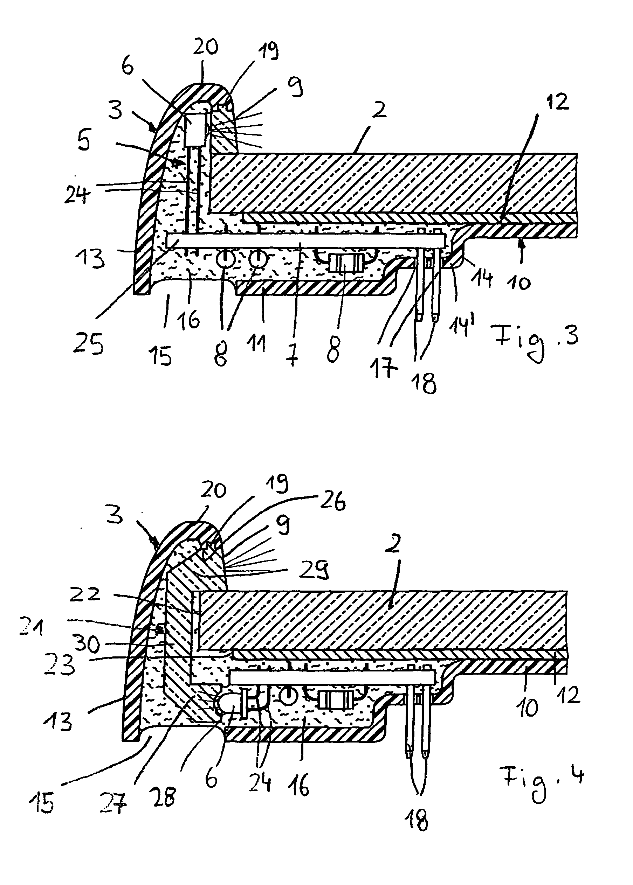

Der in Fig. 1 vereinfacht dargestellte Außenrückblickspiegel 1 ist für Kraftfahrzeuge vorgesehen. Er weist in bekannter Weise ein (nicht dargestelltes) Gehäuse auf, in dem ein (ebenfalls nicht dargestellter) Spiegelglasträger angeordnet ist, der ein EC- oder als Normalglas ausgebildetes Spiegelglas mit einem umlaufenden Spiegelglasrahmen 3 trägt. Wie Fig. 1 weiter zeigt, weist der Spiegelglasrahmen 3 in einem relativ schmalen, vom Kraftfahrzeug entfernt liegenden Randbereich 4 zwei mit Abstand nebeneinander liegende Einbauleuchten 5 auf, die in dem umlaufenden Rahmen fest integriert sind. Die Einbauleuchten 5 können modulare Anzeige- oder Signal- oder Umfeldleuchten sein. Die Einbauleuchten 5, die gleich oder unterschiedlich ausgebildet sein können, weisen ein oder mehrere Leuchtmittel 6 (Fig. 3) auf, die durch LEDs, Glühlampen oder dergleichen gebildet sein können. Sie sind auf einer Platine 7 angeordnet, die in bekannter Weise starr oder als flexible Folie ausgebildet ist. Auf der Platine 7 sind elektrische/elektronische Bauteile 8 angeordnet. Die Bauteile 8 und die Leuchtmittel 6 werden auf der Platine 7 in bekannter Weise angeordnet und mit dieser verbunden.

Wie nachfolgend noch beschrieben wird, tritt das vom Leuchtmittel 6 ausgesandte Licht über mindestens eine als Lichtfenster ausgebildete Lichtaustrittsfläche 9 oberhalb des Spiegelglases 2 aus, so daß das von der Einbauleuchte, wenn sie Anzeigefunktion hat, ausgesandte Licht vom Fahrer des Fahrzeuges deutlich gesehen wird. Da die Leuchte 5 in den Spiegelglasrahmen 3 integriert ist, benötigt sie nur wenig Einbauraum.

Das Spiegelglas 2 ist randlos als ebene Platte ausgebildet und liegt vorteilhaft unter Zwischenlage einer Heizfolie 12 auf einer Spiegelglasträgerplatte 10 auf. Sie ist im Ausführungsbeispiel einstückig mit dem Rahmen 3 ausgebildet und schließt mit einem über die Plattenebene nach unten ragenden Endabschnitt 11 an einen aufwärts verlaufenden Rahmenteil 13 an. Im Bereich unterhalb der Einbauleuchten 5 ist im Endabschnitt 11 der Trägerplatte 10 eine Öffnung 15 vorgesehen, durch die zum Befestigen und zum Schutz vor Umwelteinflüssen und Korrosion der Einbauleuchten 5 im Rahmen 3 eine Vergußmasse 16 eingebracht werden kann. Die Einbauleuchten 5 können aber auch ohne Vergußmasse auf der Spiegelglasträgerplatte 10 befestigt werden. In diesem Fall werden die Einbauleuchten 5 beispielsweise durch einen Schutzlack oder dergleichen wasserdicht versiegelt. Es kann auch nur die Öffnung 15 versiegelt oder auf andere Weise abgedichtet sein. Die Vergußmasse 16 hat den Vorteil, daß die Einbauleuchten sicher vor Vibrationen und Umwelteinflüssen geschützt sind. Die Einbauleuchten 5 können aber auch fest mit der Spiegelglasbaugruppe zum Beispiel durch Kleben, Verrasten und dergleichen verbunden werden, so daß sie einwandfrei fest mit dem Spiegel verbunden sind.

Die Einbauleuchten 5 sind über ihre Platine 7 auf einem treppenförmigen Zwischenabschnitt 14 der Trägerplatte 10 befestigt. Die Trägerplatte und ihr Endabschnitt 11 gehen über im wesentlichen rechtwinklig nach unten bzw. oben verlaufende Treppenabschnitte in einen parallel zu ihnen verlaufenden Treppenabschnitt 14' über, der Durchstecköffnungen 17 für Steckkontakte 18 oder einen Kabelabgang der Platine 7 aufweist. Sie ragen bei montierter Leuchte 5 über den Endabschnitt 11 der Trägerplatte 10 nach unten. Auf diese Weise wird die Strom/Spannungsversorgung der Bauteile 8 und des Leuchtmittels 6 der Leuchten 5 automatisch hergestellt, wenn die Steckkontakte 18 in einen (nicht dargestellten) Gegenkontakt gesteckt werden. Auf dem über das Spiegelglas 2 ragenden Randabschnitt 25 der Platine 7 befindet sich das Leuchtmittel 6, das vorteilhaft durch wenigstens eine LED gebildet ist. Es sitzt auf Kontaktfüßen 24, die geringen Abstand zum aufrechten Rahmenteil 13 haben und durch Öffnungen der Platine 7 gesteckt und mit ihr elektrisch leitend verbunden sind. Die Bauteile 8 liegen mit ausreichendem Abstand zur Spiegelglasträgerplatte 10.

Die Platine 7 ist durch die Spiegelglasträgerplatte 10 geschützt und in ihrer Lage fixiert sowie nach außen abgedeckt. Die elektrischen/elektronischen Bauteile 8 auf der Platine 7 können auch entfallen, wenn sie an einer anderen Stelle, zum Beispiel in einer Stromzuleitung oder in einem Türsteuergerät oder dergleichen des Fahrzeuges angeordnet sind.

Der leicht nach oben und in Richtung auf das Spiegelglas 2 gekrümmt verlaufende Rahmenabschnitt 13 geht in ein dachförmiges Rahmenoberteil 20 über, unter dem sich das oder die Leuchtmittel 6 befinden. Das Rahmenoberteil 20 schließt die Lichtaustritt 9 ab, die in der Einbaulage der Leuchte 5 bis zum Spiegelglas 2 reicht und durch die das vom Leuchtmittel 6 abgestrahlte Licht nach außen tritt. Die Lichtaustritt 9 ist vorteilhaft über eine Nut-Feder-Verbindung 19 mit dem Rahmenoberteil 20 formschlüssig verbunden und liegt vorteilhaft mit ihrem Rand auf dem Spiegelglas 2 auf, so daß ein Schutz gegen Eindringen von Schmutz, Feuchtigkeit und dergleichen in die Einbauleuchte 5 zumindest weitgehend verhindert wird.

Die Lichtaustritt 9 kann transparent, auch mit unterschiedlicher Einfärbung ausgebildet sein, um unterschiedliche Farbeindrücke zu erzielen. Anstelle des Licht.

Bei der Ausführungsform nach Fig. 2 entfallen die an dem vom Fahrzeug am weitesten entfernt liegenden schmalen Rahmenteil vorgesehenen Einbauleuchten. Dafür sind an dem dem Fahrzeug benachbarten schmalen Rahmenteil und dem bei montiertem Spiegel 1 oberen Rahmenteil jeweils zwei mit Abstand voneinander vorgesehene Einbauleuchten 5 im Rahmen 3 integriert. Diese Einbauleuchten 5 sind vorzugsweise gleich ausgebildet und angeordnet wie die Leuchten gemäß Fig. 3, so daß sie fest und vor Korrosion und Umwelteinflüssen geschützt im Rahmen untergebracht sind. Selbstverständlich können diese Einbauleuchten 5 auch zusätzlich zu den Einbauleuchten gemäß Fig. 1 sowie beliebig weiteren Leuchten vorgesehen sein. Die Einbauleuchten 5 können überall am umlaufenden Rahmen 3 eingebaut sein, je nach Anwendungsfall, wenn sie zum Beispiel als Totwinkel-, Fahrtrichtungsanzeiger oder als Umfeldbeleuchtung oder dergleichen eingesetzt werden.

Das Leuchtmittel 6 kann hinter oder vor einer verspiegelten Fläche liegen, die beispielsweise auf dem Lichtleiter 21 vorgesehen ist. Die Leuchten 5 können auch so angeordnet werden, daß sie ohne Lichtleiter oder mit nur einem Lichtleiter auskommen, wie bei den Ausführungsformen nach den Fig. 1 bis 3. Jede Einbauleuchte 5 kann mit einem oder auch mit mehreren Leuchtmitteln 6 in einer oder mehreren Farben versehen sein. Die Leuchtmittel 6 können auch so geformt sein, daß der Lichtleiter 21 (Fig. 4) mit angeformt ist, so daß ein zusätzlich zu montierender Lichtleiter entfallen kann. Die Anordnung der Leuchtmittel kann so gewählt sein, daß die von ihnen ausgesandten Lichtstrahlen parallel zur Spiegelglasoberfläche verlaufen. Am Rahmen 3 können eine oder mehrere Lichtaustritt 9 vorhanden sein.

Die Ausführungsform nach Fig. 4 unterscheidet sich von der nach Fig. 3 im wesentlichen nur dadurch, daß das Leuchtmittel 6 unterhalb der Platine 7 angeordnet ist und das von ihr ausgesandte Licht durch den Lichtleiter 21 zum Bereich oberhalb des Spiegelglases 2 geleitet wird. Die in Höhe des freien Endes des Rahmenoberteiles 20 liegende Stirnseite des Lichtleiters 21 bildet die Lichtaustritt 9. Der Rahmen 3 ist entsprechend der vorigen Ausführungsform einstückig mit der Spiegelglasträgerplatte 10 ausgebildet. Im Unterschied zur vorigen Ausführungsform ist die Platine 7 kürzer und erstreckt sich nicht bis über den Rand 22 des Spiegelglases 2, sondern bis in Höhe des äußeren Randes 23 der Heizfolie 12. Das Leuchtmittel 6 kann wieder durch eine LED, eine Glühlampe oder dergleichen gebildet sein, die mit Kontaktfüßen 24 mit der Platine 7 verbunden ist.

Der Lichtleiter 21 hat etwa C-Form. Mit seinem einen etwa parallel zum Spiegelglas 2 verlaufenden Schenkel 27 schließt er an das Leuchtmittel 6 an, das in eine stirnseitige, teilkreisförmige Vertiefung 28 ragt. Sie bildet die Lichteintrittsfläche des Lichtleiters 21. Der andere Schenkel 29 liegt ebenfalls im wesentlichen parallel zum Spiegelglas 2 und mit seiner Unterseite auf diesem auf. Der Schenkel 29 bildet mit seiner Stirnfläche die Lichtaustrittsfläche 9. Der Schenkel 29 weist an seiner Oberseite den federartigen Vorsprung der Nut-Feder-Verbindung 19 auf. Die Außenseiten der Schenkel 27, 29 gehen abgeschrägt in die Außenflächen des Quersteges 30 des Lichtleiters 21 über. Er erstreckt sich etwa senkrecht zum Spiegelglas 2 zwischen dessen Rand 22 und dem Rahmenabschnitt 13. Durch die ebene, quer zum Spiegelglas 2 liegende Lichtaustrittsfläche 9 des Lichtleiters 21 tritt das vom Leuchtmittel 6 abgestrahlte und im Lichtleiter weitergeleitete Licht in Richtung auf die Fahrerseite des Fahrzeuges aus.

Vorteilhaft ist der Lichtleiter 21 bis auf die kleinen Lichteintritts- und Lichtaustrittsflächen mit einer reflektierenden Oberfläche versehen, durch die verhindert wird, daß zwischen dem Lichtein- und Lichtaustritt Streulicht verloren geht. Die Spiegelglasträgerplatte 10 hat wie bei der Ausführungsform nach Fig. 2, die Öffnung 15, durch die die Vergußmasse 16 in den Rahmen 3 zum Abdichten der Einbauleuchte 5 mit der Platine 7 und den Bauteilen 8 eingebracht werden kann.

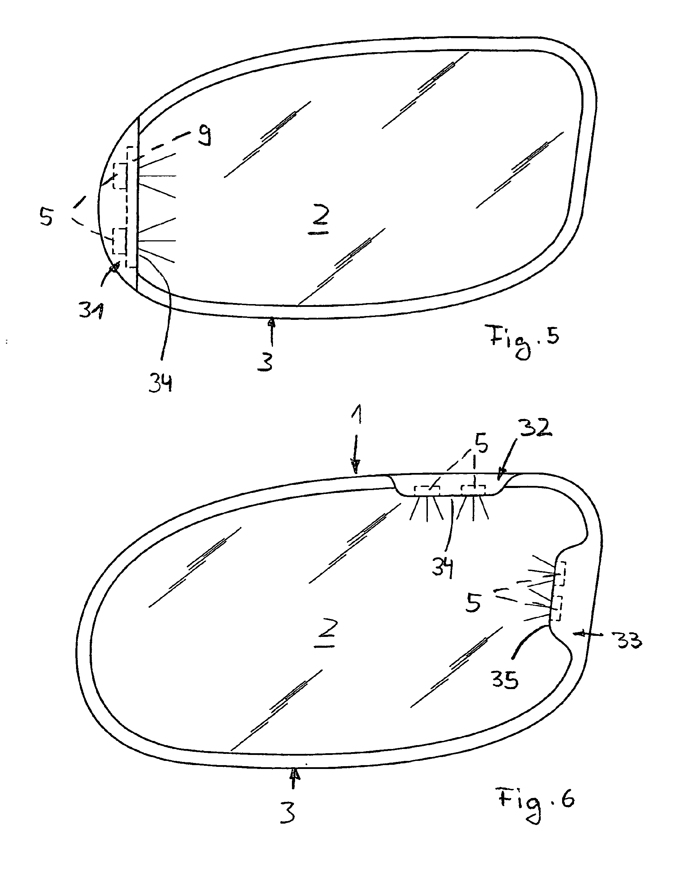

Die Ausführungsformen nach Fig. 5 bzw. 6 entsprechen der nach den Fig. 1 bzw. 2 mit dem Unterschied, daß die Einbauleuchten 5 in einer nach innen über das Spiegelglas 2 ragenden Rahmenverbreiterung 31 bzw. 32, 33 untergebracht sind, die das Spiegelglas 2 - in Draufsicht gesehen - teilweise übergreifen.

Bei der Ausführungsform nach Fig. 5 sind beide Leuchten 5, wie beim Spiegel nach Fig. 1 bzw. 3, in dem vom Fahrzeug am weitesten entfernten schmalen Rahmenteil mit Abstand nebeneinander angeordnet, wobei ein sich über beide Leuchten 6 erstreckendes gerades Lichtaustritt 9 vorgesehen ist. Es erstreckt sich nahezu über die ganze Breite des schmalen Rahmenteiles. Die Rahmenverbreiterung 31 ist in Draufsicht gemäß Fig. 5 segmentförmig ausgebildet. Ihr gerader Innenrand 34 liegt in einer Ebene mit der Lichtaustrittsfläche des Lichtleiters 21. Das vom Lichtaustritt 9 ausgesandte Licht strahlt etwa parallel zum Spiegelglas 2 in Richtung auf das Fahrzeug.

Bei der Ausführungsform nach Fig. 6 sind, wie bei der Ausführungsform nach Fig. 2, an dem dem Fahrzeug benachbarten schmalen Rahmenteil und dem in montierter Lage des Spiegels 1 oberen Rahmenlängsteil jeweils die beiden Einbauleuchten 5 vorgesehen. Im Unterschied zur Ausführungsform nach Fig. 2 ragen die Leuchten 5 nach innen über das Spiegelglas 2, so daß das ausgesandte Licht weiter nach unten bzw. weiter nach außen vom Fahrzeug weg strahlt.

Die Verbreiterungen 32, 33 haben in Draufsicht etwa Trapezform; sie verjüngen sich vom Rand des Spiegelglases 2 leicht nach innen. Die Lichtaustrittsflächen der Leuchten 5 liegen wieder in Höhe des inneren Längsrandes 34, 35 der Verbreiterungen 32, 33 des Rahmens 3. Die Rahmenverbreiterungen 31 bis 33 sind einstückig mit dem Rahmen 3 ausgebildet und bilden eine stetige Fortsetzung der Rahmenaußenseite. Sie ragen mit ihrem dem Spiegelglas 2 zugewandten Längsrand 34, 35 über den Innenrand 3' des Rahmens 3.

Die Leuchten 5 können alle oder nur zum Teil wie bei der Ausführungsform nach Fig. 3 oder 4 mit einem Lichtfenster oder einem Lichtleiter ausgebildet sein.

Anstelle des durchgehenden Lichtfensters gemäß Fig. 5 können auch zwei Lichtaustritte vorgesehen sein. Selbstverständlich können bei der Ausführungsform nach den Fig. 5 und 6 an beliebigen weiteren oder auch anderen Stellen des Rahmens 3 weitere Leuchten 5 im Rahmen selbst oder in entsprechenden Rahmenverbreiterungen vorgesehen sein, zum Beispiel wenn ein Blinker oder eine Umfeldleuchte vorgesehen werden soll. Bei den beschriebenen Ausführungsformen wird das Licht parallel zur Oberseite des Spiegelglases 2 ausgesandt.

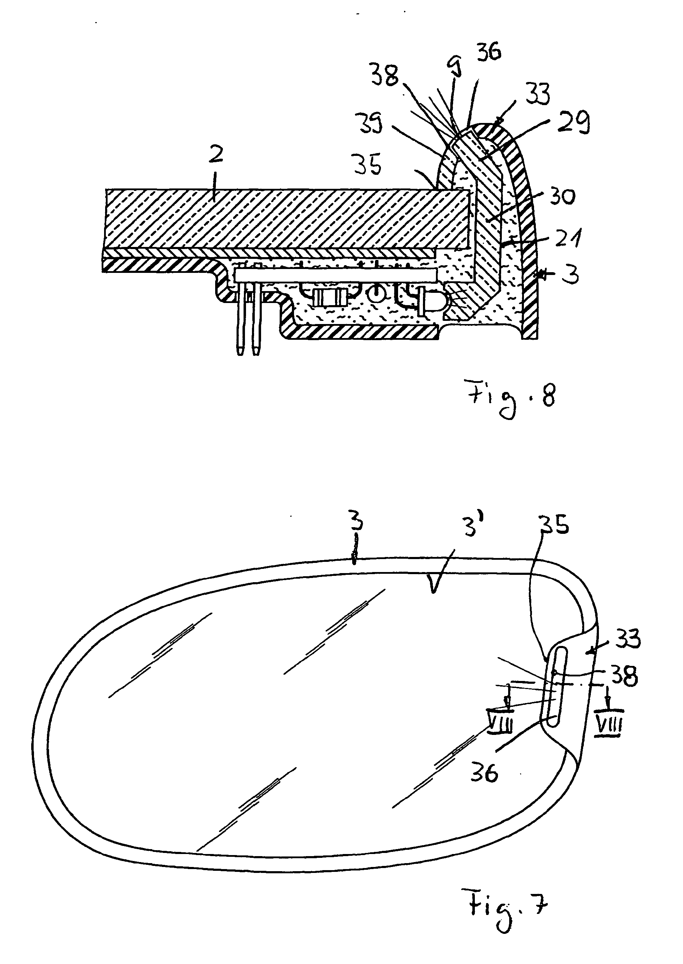

Die nicht erfindungsgemäße Ausführungsform nach den Fig. 7 und 8 unterscheidet sich von der nach Fig. 6 dadurch, daß nur die eine fahrzeugseitige Rahmenverbreiterung 33 vorgesehen ist. Sie weist an ihrer vom Spiegelglas 2 abgewandten Oberseite eine schlitzförmige Öffnung 36 auf. Sie verläuft parallel zum Längsrand 36 der Verbreiterung 33 und mit geringem Abstand von diesem. Die Verbreiterung 33 ist im übrigen im wesentlichen gleich ausgebildet wie die nach Fig. 6. Selbstverständlich können auch weitere Verbreiterungen vorhanden sein.

Wie Fig. 8 zeigt, ragt in die Öffnung 36 die die Lichtaustritt 9 bildende Stirnfläche des oberen Schenkels 29 des Lichtleiters 21. Dieser ist im wesentlichen gleich ausgebildet wie der nach Fig. 4. Der Schenkel 29 verläuft jedoch nicht parallel zum Spiegelglas 2, sondern stumpfwinklig zu diesem und zum Quersteg 30 des Lichtleiters, so daß das an der Öffnung 36 austretende Licht schräg nach oben vom Spiegelglas 2 weg austritt. Diese Ausbildung eignet sich beispielsweise für Blinklichter mit gesetzlich vorgeschriebenem Abstrahlwinkel, durch den verhindert werden soll, daß der Fahrer des Fahrzeuges in das ausgesandte Licht sieht und von diesem geblendet werden kann.

Wie Fig. 8 zeigt, kann der den inneren Längsrand 35 der Rahmenverbreiterung 33 und den inneren Längsrand 38 der Öffnung 36 aufweisende Rahmenteil 39 durch ein gesondert ausgebildetes, auf dem Spiegelglas 2 und/oder am Rahmen 3 befestigtes Teil gebildet sein.

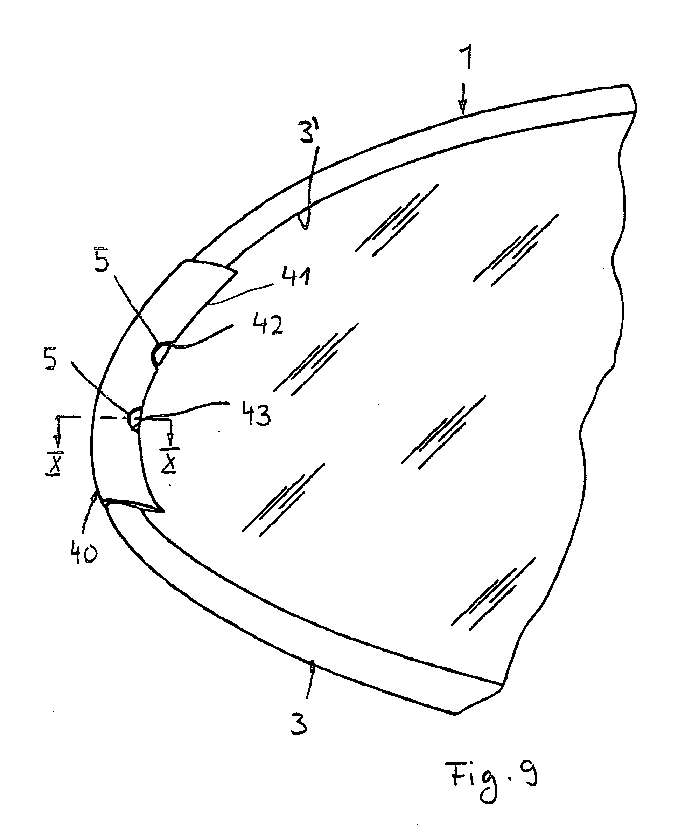

Fig. 9 zeigt eine weitere Ausführungsform, bei der zwei Einbauleuchten 5 in einem Einbauteil 40 untergebracht sind, das in einer entsprechenden (nicht dargestellten) Ausnehmung des Rahmens 3 angeordnet und mit dem Rahmen und dem Spiegelglas 2 fest verbunden, beispielsweise verklebt oder verschweißt ist. Das Anbauteil 40 ist in den Rahmen 3 so integriert, daß es nur unwesentlich über diesen vorsteht und auch eine dem Rahmenteil, in dem es vorgesehen ist, angepaßte Form aufweist. Im Bereich seines inneren Randes 41 weist das Anbauteil 40 zwei teilkreisförmige Ausnehmungen 42, 43 auf, in die die Stirnflächen bzw. Lichtaustritt 9 der einen Schenkel 29 der Lichtleiter 21 der beiden Einbauleuchten 5 ragen. Die Schenkel 29 liegen, wie bei der Ausführungsform nach Fig. 4 auf dem Spiegelglas 2 auf. Das Licht tritt etwa parallel zur Spiegelglasoberfläche aus. Das Anbauteil 40 hat etwa L-förmigen Querschnitt und liegt mit seinem oberen freien Ende 43 auf dem Schenkel 29 des Lichtleiters 21 auf. Der aufrecht verlaufende längere Schenkel 37 ist im Bereich unterhalb des Spiegelglases 2 verbreitet. Sein verbreitertes Ende 37' weist eine Aufnahme 44 für das Leuchtmittel 6 auf, das durch eine LED, eine Glühlampe oder dergleichen gebildet sein kann. Das Spiegelglas 2 ist ein EC-Spiegelglas, das unter Zwischenlage der Heizfolie 12 auf dem Spiegelglasträger 10 befestigt ist. Der Rand des Spiegelglasträgers 10 ist gegenüber dem Rand 22 des Spiegelglases 2 zurückversetzt. Die Heizfolie 12 steht über die Spiegelglasträgerplatte 10 vor und erstreckt sich bis nahe an den Rand 22 des Spiegelglases 2.

Der Spiegelkopf und/oder der Spiegelfuß des Außenrückblickspiegels 1 können weitere Elemente enthalten, wie eine Wiederholblinkteuchte, eine Umfeldleuchte, eine Kamera, ein GPS-Modul, eine Wascheinheit für das Spiegelglas, einen Lautsprecher, eine Antenne, einen Teil eines Garagentoröffners oder dergleichen. Diese Elemente können in beliebiger Kombination untereinander zusätzlich zur Einbauleuchte 5 vorgesehen sein.

## Patentansprüche

1. Außenrückblickspiegel für Fahrzeuge, insbesondere Kraftfahrzeuge, mit einem Spiegelgehäuse mit mindestens einem Spiegelglas (2), das auf einem Spiegelglasträger (10) angeordnet und von einem Rahmen (3) umgeben ist, in dem mindestens ein Leuchtmittel (6) einer Einbauleuchte (5) untergebracht ist und der für den Austritt des vom Leuchtmittel (6) ausgesandten Lichtes einen Lichtaustritt (9) aufweist, **dadurch gekennzeichnet, dass** der Lichtaustritt (9) neben dem Spiegelglas (2) im Rahmen (3) so angeordnet ist, dass das aus dem Lichtaustritt (9) austretende Licht etwa parallel zum Spiegelglas (2) strahlt.

2. Spiegel nach Anspruch 1,
**dadurch gekennzeichnet, dass** das Leuchtmittel (6) von einem Rahmenoberteil (20) übergriffen ist.

3. Spiegel nach Anspruch 1 oder 2,
**dadurch gekennzeichnet, dass** das Leuchtmittel (6) in einer Verbreiterung (31 bis 33) und/oder einem Anbauteil (40) des Rahmens (3) angeordnet ist, die nach innen über den Innenrand (3') des Rahmens (3) vorstehen.

4. Spiegel nach Anspruch 3,
**dadurch gekennzeichnet, dass** die Außenseite der Verbreiterung (31 bis 33) eine stetige Fortsetzung der Außenseite des Rahmens (3) bildet.

5. Spiegel nach einem der Ansprüche 1 bis 4,
**dadurch gekennzeichnet, dass** das Leuchtmittel (6) und/oder der Lichtaustritt (9) für das vom Leuchtmittel (6) ausgesandte Licht im über den Innenrand (3') des Rahmens (3) ragenden Teil der Verbreiterung (31 bis 33) und/oder des Anbauteiles (40) angeordnet ist.

6. Spiegel nach einem der Ansprüche 3 bis 5,
**dadurch gekennzeichnet, dass** sich die Verbreiterung (31 bis 33) vom Rahmen (3) aus etwa trapezförmig nach innen verjüngt.

7. Spiegel nach einem der Ansprüche 3 bis 6,
**dadurch gekennzeichnet, dass** das Leuchtmittel (6) und/oder der Lichtaustritt (9) an einem Längsrand (34, 35) der Verbreiterung (31 bis 33) und/oder dem innen liegenden Rand (41) des Anbauteiles (40) vorgesehen sind.

8. Spiegel nach einem der Ansprüche 1 bis 7,
**dadurch gekennzeichnet, dass** mindestens zwei Leuchtmittel (6) nebeneinander am Rahmen (3) vorgesehen sind.

9. Spiegel nach einem der Ansprüche 1 bis 8,
**dadurch gekennzeichnet, dass** an mindestens einem Rahmenabschnitt, vorzugsweise an mehreren neben- und/oder einander gegenüberliegenden Rahmenabschnitten jeweils mindestens ein Leuchtmittel (6) vorgesehen ist.

10. Spiegel nach einem der Ansprüche 3 bis 9,
**dadurch gekennzeichnet, dass** die Verbreiterung (31 bis 33) und/oder das Anbauteil (40) mindestens eine Öffnung (36; 42, 43) für mindestens einen Lichtaustritt (9) aufweisen.

11. Spiegel nach einem der Ansprüche 3 bis 10,
**dadurch gekennzeichnet, dass** das Anbauteil (40) am Rahmen (3) befestigt, vorzugsweise unlösbar befestigt, wie verklebt, verschweißt oder dgl. ist.

12. Spiegel nach einem der Ansprüche 3 bis 11,
**dadurch gekennzeichnet, dass** die Form des Anbauteiles (40) an die Kontur des Rahmenabschnittes angepasst ist, an dem es befestigt ist.

13. Spiegel nach einem der Ansprüche 1 bis 12,
**dadurch gekennzeichnet, dass** das an einer starr und/oder flexibel ausgebildeten Platine (7) vorgesehene Leuchtmittel (6) eine LED, eine Glühlampe oder dgl, ist.

14. Spiegel nach Anspruch 13,
**dadurch gekennzeichnet, dass** die Platine (7) als Folie ausgebildet ist.

15. Spiegel nach Anspruch 13 oder 14,
**dadurch gekennzeichnet, dass** an der Platine (7) mindestens ein Steckanschluss (18) und/oder Kabel vorgesehen sind.

16. Spiegel nach einem der Ansprüche 1 bis 15,
**dadurch gekennzeichnet, dass** das Leuchtmittel (6) und/oder die Einbauleuchte (5) derart am Spiegelglasträger (10) angeordnet sind, dass das vom Leuchtmittel (6) ausgesandte Licht im Bereich der Außenseite des Spiegelglases (2) austritt.

17. Spiegel nach einem der Ansprüche 1 bis 16,
**dadurch gekennzeichnet, dass** das vom Leuchtmittel (6) ausgesandte Licht durch mindestens einen Lichtleiter (21) nach außen geleitet ist, das an das Leuchtmittel (6) anschließt und den Rand (22) des Spiegelglases (2) mindestens teilweise umgreift.

18. Spiegel nach einem der Ansprüche 13 bis 17,
**dadurch gekennzeichnet, dass** das Leuchtmittel (6) an einem über das Spiegelglas (2) ragenden Randabschnitt (25) der Platine (7) befestigt ist.

19. Spiegel nach einem der Ansprüche 1 bis 18,
**dadurch gekennzeichnet, dass** das Leuchtmittel (6) im Bereich oberhalb des Spiegelglases (2) hinter einer Lichtscheibe als Lichtaustritt (9) angeordnet ist.

20. Spiegel nach einem der Ansprüche 1 bis 19,
**dadurch gekennzeichnet, dass** die Einbauleuchte (5) im einem vom Rahmen (3) und dem Spiegelglasträger (10) begrenzten Einbauraum untergebracht ist.

21. Spiegel nach Anspruch 20,
**dadurch gekennzeichnet, dass** die Spiegelglasträgerplatte (10) eine Befüllöffnung (15) zum Einbringen von Vergussmasse (16) in den Einbauraum aufweist.

22. Spiegel nach Anspruch 21,
**dadurch gekennzeichnet, dass** die Befüllöffnung (15) in einem gegenüber dem Spiegelglas (2) zurückgesetzten Randabschnitt (11) der Spiegelglasträgerplatte (10) vorgesehen ist.

23. Spiegel nach einem der Ansprüche 13 bis 22,
**dadurch gekennzeichnet, dass** die Platine (7) mit ihren Steckanschlüssen (18) durch Öffnungen (17) in der Spiegelglasträgerplatte (10) ragt.

24. Spiegel nach einem der Ansprüche 1 bis 23,
**dadurch gekennzeichnet, dass** der Lichtaustritt (9) und/oder der Lichtleiter (21) im Bereich zwischen dem Spiegelglas (2) und einem aufrechten Rahmenteil (13) des Rahmens (3) liegt.

25. Spiegel nach einem der Ansprüche 13 bis 24,
**dadurch gekennzeichnet, dass** das an den Lichtleiter (21) anschließende Leuchtmittel (6) an der vom Spiegelglas (2) abgewandten Seite der Platine (7) vorgesehen ist.

26. Spiegel nach einem der Ansprüche 17 bis 25,
**dadurch gekennzeichnet, dass** der Lichtleiter (21) etwa U-förmigen oder L-förmigen Querschnitt hat und mit seinem einen Schenkel (29) auf dem Spiegelglas (2) aufliegt.

27. Spiegel nach Anspruch 26,
**dadurch gekennzeichnet, dass** das Leuchtmittel (6) in eine Vertiefung (28) der Stirnseite des anderen Schenkels (27) des Lichtleiters (21) ragt.

28. Spiegel nach Anspruch 26 oder 27,
**dadurch gekennzeichnet, dass** der eine Schenkel (29) des Lichtleiters (21) den Lichtaustritt (9) bildet.

29. Spiegel nach einem der Ansprüche 19 bis 28,
**dadurch gekennzeichnet, dass** die Lichtscheibe (9) als Lichtaustritt mit dem Rahmenoberteil (20) des Rahmens (3) über eine Nut-Feder-Verbindung (19) in Eingriff ist.

30. Spiegel nach einem der Ansprüche 26 bis 29,
**dadurch gekennzeichnet, dass** der Lichtleiter (21) mit seinem einen Schenkel (29) in die Öffnung (42, 43) des Anbauteiles (40) des Rahmens (3) ragt.

31. Spiegel nach einem der Ansprüche 26 bis 30,
**dadurch gekennzeichnet, dass** der L-förmige Lichtleiter (21) am freien Ende (37') seines längeren Schenkels (37) eine Aufnahme (44) für das Leuchtmittel (6) aufweist.

32. Spiegel nach einem der Ansprüche 3 bis 31,
**dadurch gekennzeichnet, dass** der Rahmen (3) für das Anbauteil (40) an wenigstens einem Bereich unterbrochen ist.

33. Spiegel nach einem der Ansprüche 13 bis 32,
**dadurch gekennzeichnet, dass** die Platine (7) mit elektrischen/elektronischen Bauteilen (8) bestückt ist.

## Claims

1. Exterior rear view mirror for vehicles, particularly cars, with a mirror housing with at least one mirror glass (2) which is mounted on a mirror glass support (10) and surrounded by a framework (3), in which at least one illuminant (6) of a recessed luminaire (5) is placed, and which features a light outlet (9) for the emission of light sent out by the illuminant (6), **characterised in that** the light outlet (9) is mounted alongside the mirror glass (2) in the frame (3) so that the light emitted from the light outlet (9) beams approximately parallel to the mirror glass (2).

2. Mirror according to claim 1, **characterised in that** the illuminant (6) is surrounded by an upper frame part (20).

3. Mirror according to either claim 1 or 2, **characterised in that** the illuminant (6) is mounted in an enlargement (31 to 33) and/or an attachment part (40) of the frame (3) which protrude inwards across the inner edge (3') of the frame (3).

4. Mirror according to claim 3, **characterised in that** the exterior side of the enlargement (31 to 33) forms a continuous extension of the exterior of the frame (3).

5. Mirror according to any one of claims 1 to 4, **characterised in that** the illuminant (6) and/or the light outlet (9) for the light emitted from the illuminant (6) is arranged across the inner edge (3') of the frame (3) forming part of the extension (31 to 33) and/or the attachment part (40).

6. Mirror according to any one of claims 3 to 5 **characterised in that** the enlargement (31 to 33) tapers inwards away from the frame (3) in a trapezoid manner.

7. Mirror according to any one of claims 3 to 6, **characterised in that** the illuminant (6) and/or the light outlet (9) are provided on a longitudinal edge (34, 35) of the enlargement (31 to 33) and/or on the inner lying edge (41) of the attachment part (40).

8. Mirror according to any one of claims 1 to 7, **characterised in that** at least two illuminants (6) arc provided side by side in the frame (3).

9. Mirror according to any one of claims 1 to 8, **characterised in that** in each case at least one illuminant (6) is provided on at least one frame section, preferably on several frame sections next to or opposite each other.

10. Mirror according to any one of claims 3 to 9, **characterised in that** the enlargement (31 to 33) and/or the attachment part (40) feature at least one opening (36; 42,43) for at least one light outlet (9).

11. Mirror according to any one of claims 3 to 10, **characterised in that** the attachment part (40) is attached to the frame (3), preferably permanently attached, for example glued, welded or similar.

12. Mirror according to any one of claims 3 to 1 **characterised in that** the form of the attachment part (40) is adapted to the contour of the frame section to which it is attached.

13. Mirror according to anyone of claims 1 to 12, **characterised in that** the provided illuminant (6) on a rigid and/or flexibly formed board (7) is an LED, a light bulb or similar.

14. Mirror according to claim 13, **characterised in that** the board (7) is formed as a film.

15. Mirror according to claim 13 or 14, **characterised in that** at least one plug-in connection (18) and/or cable are provided on the board (7).

16. Mirror according to any one of claims 1 to 15, **characterised in that** the illuminant (6) and/or the recessed luminaire (5) are arranged in such a way on the mirror glass support (10) so that the light emitted from the illuminant (6) escapes in the region of the exterior side of the mirror glass (2).

17. Mirror according to any one of claims 1 to 16, **characterised in that** the light emitted from the illuminant (6) is led towards the exterior by means of at least one light conductor (21), which is attached to the illuminant (6) and at least partly encompasses the edge (22) of the mirror glass (2).

18. Mirror according to any one of claims 13 to 17, **characterised in that** the illuminant (6) is attached to a frame section (25) of the board (7), the former protruding above the edge of the mirror glass (2).

19. Mirror according to any one of claims 1 to 18, **characterised in that** the illuminant (6) is arranged in the region above the mirror glass (2) behind a lighting panel as a light outlet (9).

20. Mirror according to any one of claims 1 to 19, **characterised in that** the recessed luminaire (5) is placed in a clearance bounded by the frame (3) and the mirror glass support (10).

21. Mirror according to claim 20, **characterised in that** the mirror glass support panel (10) features a filling opening (15) for the insertion of casting compound (16) into the clearance.

22. Mirror according to claim 21, **characterised in that** the filling opening (15) is provided in a set-back edge section (11) of the mirror glass support panel (10) opposite the mirror glass (2).

23. Mirror according to any one of claims 13 to 22, **characterised in that** the board (7) with its plug in connections (18) protrudes through openings (17) in the mirror glass support panel (10).

24. Mirror according to any one of claims 1 to 23, **characterised in that** the light outlet (9) and/or the light conductor (21) lies in the region between the mirror glass (2) and an upright frame part (13) of the frame (3).

25. Mirror according to any one of claims 13 to 24, **characterised in that** the illuminant (6) attached to the light conductor (21) is provided on the side of the board (7) which is facing away from the mirror glass (2).

26. Mirror according to any one of claims 17 to 25, **characterised in that** the light conductor (21) has a cross-section roughly forming a U or L shape, and is supported by its own side (29) on the mirror glass (2).

27. Mirror according to claim 26, **characterised in that** the illuminant (6) protrudes in a recess (28) of the end face of the other side (27) of the light conductor (21).

28. Mirror according to either claim 26 or 27, **characterised in that** one side (29) of the light conductor (21) forms the light outlet (9).

29. Mirror according to any one of claims 19 to 28, **characterised in that** the lighting panel (9) as a light outlet is meshed with the upper frame part (20) of the frame (3) by a tongue and groove joint (19).

30. Mirror according to any one of claims 26 to 29, **characterised in that** the light conductor (21) protrudes with its own side (29) into the opening (42,43) of the attachment part (40) of the frame (3).

31. Mirror according to any one of claims 26 to 30, **characterised in that** the L-shaped light conductor (21) features a slot (44) for the illuminant (6) at the free end (37') of its longer side (37).

32. Mirror according to any one of claims 3 to 3 **characterised in that** the frame (3) for the attachment part (40) is open in at least one region.

33. Mirror according to any one of claims 13 to 32, **characterised in that** the board (7) is fitted with electric/electronic components (8).

## Revendications

1. Rétroviseur extérieur pour véhicules, notamment véhicules automobiles, avec un logement de miroir comprenant au moins une glace (2) qui est disposée sur un support de glace (10) et entourée par un cadre (3), dans lequel au moins un moyen lumineux (6) d'une lampe encastrée (5) est logé et qui présente une sortie de lumière (9) pour la sortie de la lumière émise par le moyen lumineux (6), **caractérisé en ce que** la sortie de lumière (9) est disposée dans le cadre (3) à côté de la glace (2), de sorte que la lumière sortant de la sortie de lumière (9) rayonne de manière à peu près parallèle à la glace (2).

2. Rétroviseur selon la revendication 1,
**caractérisé en ce que** le moyen lumineux (6) est recouvert par une partie supérieure de cadre (20).

3. Rétroviseur selon la revendication 1 ou 2,
**caractérisé en ce que** le moyen lumineux (6) est disposé dans un élargissement (31 à 33) et/ou une pièce rapportée (40) du cadre (3) qui dépassent vers l'intérieur au-dessus du bord interne (3') du cadre (3).

4. Rétroviseur selon la revendication 3.
**caractérisé en ce que** le côté externe de l'élargissement (31 à 33) forme un prolongement continu du côté externe du cadre (3).

5. Rétroviseur selon l'une quelconque des revendications 1 à 4,
**caractérisé en ce que** le moyen lumineux (6) et/ou la sortie de lumière (9) pour la lumière émise par le moyen lumineux (6) sont disposés dans la partie dépassant au-dessus du bord interne (3') du cadre (3) de l'élargissement (31 à 33) et/ou de la pièce rapportée (40).

6. Rétroviseur selon l'une quelconque des revendications 3 à 5,
**caractérisé en ce que** l'élargissement (31 à 33) rétrécit depuis le cadre (3) de manière à peu près trapézoïdale vers l'intérieur.

7. Rétroviseur selon l'une quelconque des revendications 3 à 6,
**caractérisé en ce que** le moyen lumineux (6) et/ou la sortie de lumière (9) sont prévus sur un bord longitudinal (34, 35) de l'élargissement (31 à 33) et/ou le bord se situant à l'intérieur (41) de la pièce rapportée (40).

8. Rétroviseur selon l'une quelconque des revendications 1 à 7,
**caractérisé en ce qu'**au moins deux moyens lumineux (6) sont prévus l'un à côté de l'autre sur le cadre (3).

9. Rétroviseur selon l'une quelconque des revendications 1 à 8,
**caractérise en ce qu'**à chaque fois au moins un moyen lumineux (6) est prévu sur au moins une section de cadre, de préférence sur plusieurs sections de cadre juxtaposées et/ou opposées.

10. Rétroviseur selon l'une quelconque des revendications 3 à 9,
**caractérisé en ce que** l'élargissement (31 à 33) et/ou la pièce rapportée (40) présentent au moins une ouverture (36 ; 42, 43) pour au moins une sortie de lumière (9).

11. Rétroviseur selon l'une quelconque des revendication 3 à 10,
**caractérisé en ce que** la pièce rapportée (40) est fixée sur le cadre (3), de préférence fixée de manière inamovible, tel que collée, soudée ou similaire.

12. Rétroviseur selon l'une quelconque des revendications 3 à 11,
**caractérisé en ce que** la forme de la pièce rapportée (40) est adaptée au contour de la section de cadre sur laquelle elle est fixée.

13. Rétroviseur selon l'une quelconque des revendications 1 à 12,
**caractérisé en ce que** le moyen lumineux (6) prévu sur une platine (7) réalisée de matière rigide et/ou flexible est une LED, une lampe à incandescence ou similaire.

14. Rétroviseur selon la revendication 13,
**caractérisé en ce que** la platine (7) est réalisée en tant que film.

15. Rétroviseur selon la revendication 13 ou 14.
**caractérisé en ce qu'**au moins un raccord enfichable (18) et/ou un diable sont prévus sur la platine (7).

16. Rétroviseur selon l'une quelconque des revendications 1 à 15,
**caractérisé en ce que** le moyen lumineux (6) et/ou la lampe encastrée (5) sont disposés sur le support de glace (10) de telle sorte que la lumière émise par le moyen lumineux (6) sort dans la région du côté externe de la glace (2).

17. Rétroviseur selon l'une quelconque des revendications 1 à 16.
**caractérisé en ce que** la lumière émise par le moyen lumineux (6) est guidée vers l'extérieur à travers au moins un conduit de lumière (21) qui se raccorde au moyen lumineux (6) et enveloppe au moins partiellement le bord (22) de la glace (2).

18. Rétroviseur selon l'une quelconque des revendications 13 à 17,
**caractérisé en ce que** le moyen lumineux (6) est fixé sur une section de bord (25) de la platine (7) dépassant au-dessus de la glace (2).

19. Rétroviseur selon l'une quelconque des revendications 1 à 18,
**caractérisé en ce que** le moyen lumineux (6) est disposé dans la région au-dessus de la glace (2) derrière un disque lumineux en tant que sortie de lumière (9).

20. Rétroviseur selon l'une quelconque des revendications 1 à 19,
**caractérisé en ce que** la lampe encastrée (5) est logée dans un espace encastré limité par le cadre (3) et le support de glace (10).

21. Rétroviseur selon la revendication 20,
**caractérisé en ce que** la plaque support de glace (10) présente une ouverture de remplissage (15) pour l'incorporation de masse de remplissage (16) dans l'espace encastré.

22. Rétroviseur selon la revendication 21,
**caractérisé en ce que** l'ouverture de remplissage (15) est prévue dans une section de bord (11) de la plaque support de glace (10) reculéc par rapport à la glace (2).

23. Rétroviseur selon l'une quelconque des revendications 13 à 22,
**caractérisé en ce que** la platine (7) dépasse avec ses raccords enfichables (18) à travers des ouvertures (17) dans la plaque support de glace (10).

24. Rétroviseur selon l'une quelconque des revendications 1 à 23,
**caractérisé en ce que** la sortie de lumière (9) et/ou le conduit de lumière (21) se situent dans la région entre la glace (2) et une partie verticale (13) du cadre (3).

25. Rétroviseur selon l'une quelconque des revendications 13 à 24,
**caractérisé en ce que** le moyen lumineux (6) raccordé au conduit de lumière (21) est prévu sur le côté de la platine (7) détourné de la glace (2).

26. Rétroviseur selon l'une quelconque des revendications 17 à 25,
**caractérisé en ce que** le conduit de lumière (21) a une section transversale à peu près en forme de U ou en forme de L et repose avec une de ses branches (29) sur la glace (2).

27. Rétroviseur selon la revendication 26,
**caractérisé en ce que** le moyen lumineux (6) dépasse dans un renfoncement (28) du côté frontal de l'autre branche (27) du conduit de lumière (21).

28. Rétroviseur selon la revendication 26 ou 27,
**caractérisé en ce que** l'une des branches (29) du conduit de lumière (21) forme la sortie de lumière (9).

29. Rétroviseur selon l'une quelconque des revendications 19 à 28,
**caractérisé en ce que** le disque lumineux (9) en tant que sortie de lumière s'enclenche avec la partie supérieure (20) du cadre (3) par le biais d'une connexion à rainure et ressort (19).

30. Rétroviseur selon l'une quelconque des revendications 26 à 29,
**caractérisé en ce que** le conduit de lumière (21) dépasse avec une de ses branches (29) dans l'ouverture (42, 43) de la pièce rapportée (40) du cadre (3).

31. Rétroviseur selon l'une quelconque des revendications 26 à 30,
**caractérisé en ce que** le conduit de lumière (21) en forme de L présente à l'extrémité libre (37') de sa branche la plus longue (37) un logement (44) pour le moyen lumineux (6).

32. Rétroviseur selon l'une quelconque des revendications 3 à 31,
**caractérisé en ce que** le cadre (3) pour la pièce rapportée (40) est interrompu en au moins une région.

33. Rétroviseur selon l'une quelconque des revendications 13 à 32,
**caractérisé en ce que** la platine (7) est équipée de composants électriques/électroniques (8).
